# EUROPÄISCHE PATENTSCHRIFT

(11) **EP 0 601 401 B1**
(45) Veröffentlichungstag und Bekanntmachung des Hinweises auf die Patenterteilung: **11.02.1998**
(21) Anmeldenummer: 93118977.3
(22) Anmeldetag: 25.11.1993
(51) Int. Cl.: C09B 33/12, D21H 21/28

(54) **Verdoppelte Azofarbstoffe**
Duplicated azo dyes
Colorants azoiques doublés

(30) Priorität: 05.12.1992 DE 4240981
(43) Veröffentlichungstag der Anmeldung: 15.06.1994
(73) Patentinhaber: BASF Aktiengesellschaft, 67063 Ludwigshafen (DE)
(72) Erfinder: Mayer, Udo, Dr., D-6710 Frankenthal (DE); Degen, Hans-Juergen, Dr., Randolph, New Jersey 07869 (US)

(56) Entgegenhaltungen:
- CH-A- 560 241
- DE-A- 3 434 921
- US-A- 4 071 312

## Beschreibung

Die vorliegende Erfindung betrifft neue Azofarbstoffe der Formel I 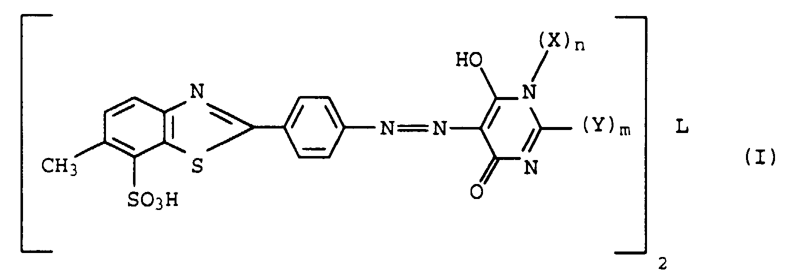 in der
im Fall a)
m 1,
n 0,
Y Hydroxy und
L C₁-C₆-Alkylen oder
im Fall b)
m 0 oder 1,
n 1,
X Wasserstoff,
Y Imino und
L, wenn m 0 ist, Piperazin-1,4-diyl oder, wenn m 1 ist, C₂-C₆-Alkylen oder Phenylen bedeuten,
deren Verwendung zum Färben oder Bedrucken von Papierstoffen sowie Farbstoffmischungen, enthaltend die neuen Farbstoffe.

Aus der US-A-4 071 312 ist der Farbstoff der Formel II 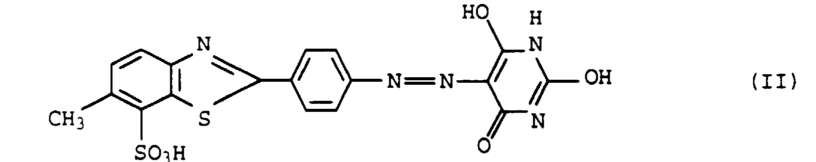 bekannt, der wegen seiner brillanten gelben Farbe zum Färben von Papierstoffen bevorzugt verwendet wird. Allerdings weist dieser Farbstoff anwendungstechnische Mangel auf, indem er Papier deutlich siebseitig färbt, d.h. bei der Papiereinfärbung wird die Unterseite (Siebseite) deutlich starker eingefärbt als die Oberseite.

Aufgabe der vorliegenden Erfindung war es nun, neue Farbstoffe bereitzustellen, die sich vorteilhaft zum Färben oder Bedrucken von Papierstoffen eignen. Die neuen Farbstoffe sollten das Papier nicht mehr siebseitig sondern vielmehr oberseitig farben.

Demgemäß wurden die eingangs naher bezeichneten verdoppelten Azofarbstoffe der Formel I gefunden.

Die neuen Azofarbstoffe der Formel I sind jeweils in Form der freien Säure angegeben. Selbstverständlich werden auch deren Salze von den Patentansprüchen umfaßt.

Geeignete Kationen leiten sich von Metall- oder Ammoniumionen ab. Metallionen sind insbesondere die Lithium-, Natrium- oder Kaliumionen. Unter Ammoniumionen im erfindungsgemaßen Sinne sind unsubstituierte oder substituierte Ammoniumkationen zu verstehen. Substituierte Ammoniumkationen sind z.B. Monoalkyl-, Dialkyl-, Trialkyl-, Tetraalkyl- oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium-, Piperazinium- oder N-Alkylpiperaziniumkationen oder deren N-monoalkyl- oder N,N-dialkylsubstituierte Produkte. Unter Alkyl ist dabei im allgemeinen geradkettiges oder verzweigtes C₁-C₂₀-Alkyl zu verstehen, das durch Hydroxylgruppen substituiert und/oder durch Sauerstoffatome in Etherfunktion unterbrochen sein kann.

Besonders als Kationen hervorzuheben sind Lithium-, Natrium-, Kalium-, N,N-Dimethylethanolammonium- oder N,N-Diethylethanolammoniumionen.

Die in Formel I auftretenden Alkylenreste können sowohl geradkettig als auch verzweigt sein.

Geeignete L sind z.B. CH₂, (CH₂)₂, (CH₂)₃, (CH₂)₄, (CH₂)₅, (CH₂)₆, CH(CH₃)CH₂ oder CH(CH₃)CH(CH₃).

Die Azofarbstoffe der Formel I können in verschiedenen tautomeren Formen vorliegen, z.B. 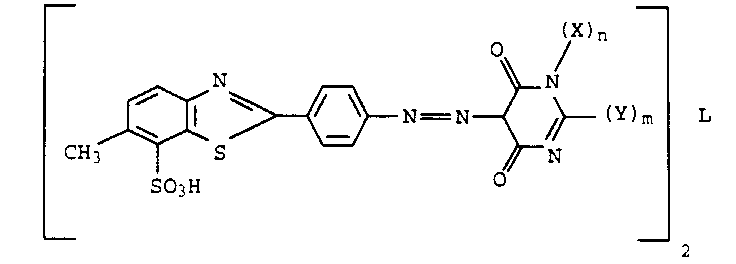 oder 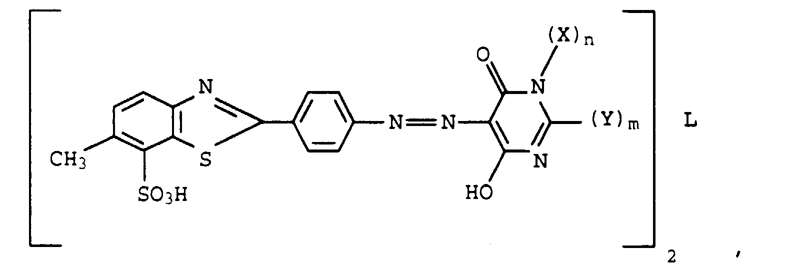 die alle von den Patentansprüchen umfaßt werden.

Bevorzugt sind Azofarbstoffe der Formel I, in der m 1 und n 0 bedeuten.

Bevorzugt sind weiterhin Azofarbstoffe der Formel I, in der m 0, n 1 und L Piperazin-1,4-diyl bedeuten.

Besonders bevorzugt sind Farbstoffe der Formel I, in der m 1, n 0 und L C₄-C₆-Alkylen, insbesondere C₄- oder C₆-Alkylen, bedeuten.

Die erfindungsgemaßen Farbstoffe können nach an sich bekannten Methoden erhalten werden.

Beispielsweise kann man das Diazoniumsalz, das sich von der 2-(4-Aminophenyl)-6-methylbenzthiazol-7-sulfonsäure ableitet, mit Barbitursäurederivaten der Formel III 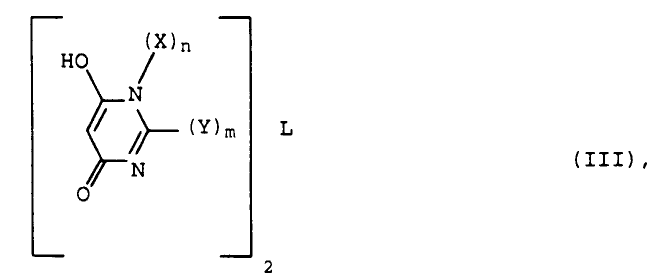 in der m, n, L, X und Y jeweils die obengenannte Bedeutung besitzen, kuppeln.

Die Herstellung der Barbitursäurederivate III erfolgt ebenfalls nach an sich bekannten Methoden und ist exemplarisch in den nachfolgenden Beispielen beschrieben.

Die erfindungsgemaßen Azofarbstoffe der Formel I eignen sich in vorteilhafter Weise zum Färben oder Bedrucken von Papierstoffen nach den üblichen, an sich bekannten Methoden. Bevorzugt werden sie in Verfahren zum Färben oder Bedrucken von Papier in der Masse oder zur Oberflächenfärbung verwendet. Dabei können Papiere aller Arten, vor allem gebleichtes, ungeleimtes oder geleimtes ligninfreies Papier, gefärbt werden, wobei von gebleichtem oder ungebleichtem Zellstoff ausgegangen werden kann.

Bei der Anwendung der neuen Azofarbstoffe der Formel I erfolgt eine oberseitige Anfärbung des Papiers, d.h. die Oberseite wird stärker angefärbt als die Unterseite (Siebseite).

Eine weitere Aufgabe der vorliegenden Erfindung war es, Farbmittel bereitzustellen, mittels derer eine gleichmäßige Färbung von Ober- und Siebseite von Papierstoffen erreicht werden kann.

Es wurden nun Farbstoffmischungen gefunden, enthaltend einen Azofarbstoff der Formel I sowie den Farbstoff der Formel II

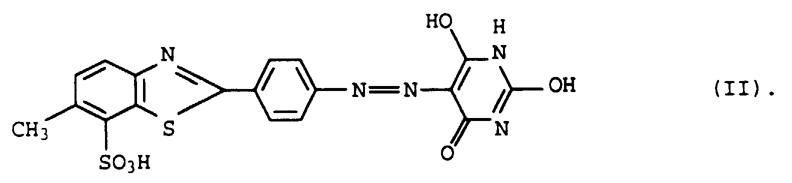

Die neuen Farbstoffmischungen eignen sich vorteilhaft zum Färben oder Bedrucken von Papierstoffen. Beim Färben von Papierstoffen wird eine gleichmäßige Färbung von Ober- und Siebseite erreicht.

In den neuen Mischungen liegen die Farbstoffe I und II in der Regel im Gewichtsverhältnis 1:4 bis 4:1 vor.

Die folgenden Beispiele sollen die Erfindung näher erläutern.

### Beispiel 1

a) Eine Lösung von 232 g 1,6-Diaminohexan in 500 ml Wasser wurde bei 60 bis 70°C mit 480 g Harnstoff versetzt. Das Gemisch wurde erhitzt und 3 Stunden bei Siedetemperatur gehalten. Dabei wurde Ammoniak freigesetzt und es bildete sich ein kristalliner Niederschlag. Man verdünnte mit 500 ml Wasser und stellte mit konz. Salzsäure einen pH-Wert von 3 ein. Das noch heiße Reaktionsgemisch wurde in 3000 g Eiswasser eingetragen. Der Niederschlag wurde abgesaugt, mit Wasser gewaschen und bei 70°C getrocknet. Man erhielt 347 g Hexamethylenharnstoff der Formel

   H₂N-CO-NH -(CH₂)₆-NH-CO-NH₂

   (Fp.: 200 bis 201°C).
b) Eine Mischung von 40,4 g Hexamethylenharnstoff (Bsp. la) und 100 ml N,N-Dimethylformamid wurde mit 80 g 30 gew.-%iger Natriummethanolatlösung in Methanol versetzt. Man erwärmte auf 60°C und ließ 58,7 g Malonsäuredimethylester zulaufen. Man erhöhte die Temperatur in ca. 15 Minuten auf 110°C und destillierte dabei Methanol ab. Der Niederschlag ging in Lösung. Nachdem man weitere 3 Stunden bei 110°C gerührt hatte, kam die Abspaltung von Methanol zum Stillstand und das Natriumsalz der Hexamethylenbarbitursäure kristallisierte aus. Man versetzte mit 300 ml Wasser, was wieder zu einer Lösung führte, und stellte mit Salzsäure einen pH-Wert von 2 bis 2,5 ein. Dabei fiel die Hexamethylenbarbitursäure in gut ausgebildeten Kristallen aus. Man ließ auf Raumtemperatur abkühlen, saugte das Produkt ab, wusch es mit Wasser aus und trocknete bei 70°C. Man erhielt 46 g der Verbindung der Formel 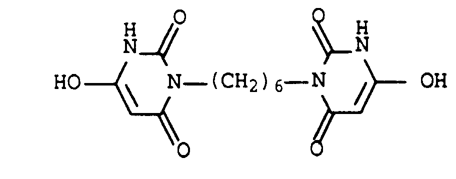 (Fp.: 224 bis 228°C).
c) 128 g 2-(4-Aminophenyl)-6-methylbenzthiazol-7-sulfonsäure wurden in 1500 ml Wasser mit 32 g 50 gew.-%iger Natronlauge in Lösung gebracht und mit 120 g 23 gew.-%iger wäßriger Natriumnitritlösung versetzt. Die resultierende Lösung ließ man in einer Stunde zu einer Mischung von 1500 ml Wasser, 700 g Eis und 160 ml konz. Salzsäure laufen. Dabei fiel ein Niederschlag aus. Man rührte noch 1,5 Stunden bei 0 bis 5°C nach, saugte den Niederschlag ab, wusch ihn mit Wasser und trocknete ihn bei 60°C. Man erhielt 122 g der Verbindung der Formel 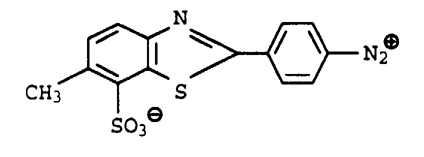
d) Zu einer Suspension von 8,5 g Hexamethylenbarbitursäure (Bsp. 1b) in 119 ml Wasser gab man bei 0 bis 5°C 16,6 g des unter c) beschriebenen Diazoniumsalzes. Man rührte 2 Stunden und versetzte mit 21 g N,N-Diethylethanolamin. Der gebildete Farbstoff der Formel (in Form der freien Säure) 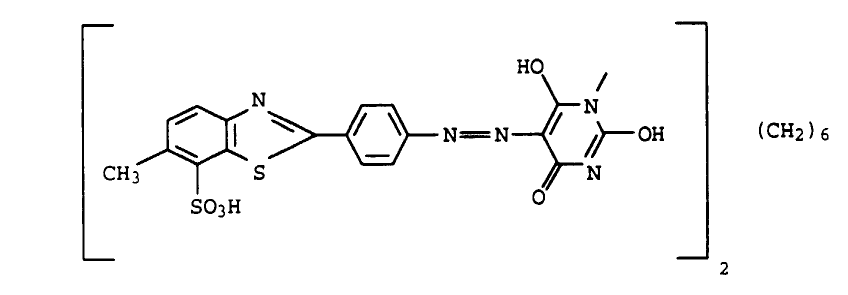 ging dabei in Lösung. Der Flüssigfarbstoff wurde filtriert und hatte danach eine gute Lagerstabilität. Er absorbiert bei 412 nm und zieht praktisch vollständig auch auf holzfreie Papiere auf, wobei die Oberseite stärker als die Unterseite angefärbt ist.

Analog Beispiel 1 wurden die in der folgenden Tabelle 1 aufgeführten Farbstoffe der Formel 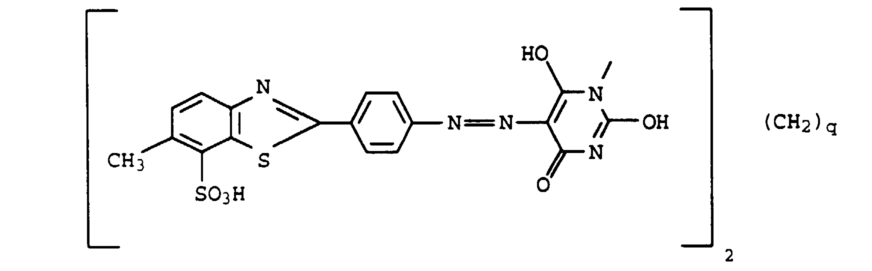 erhalten.

**Tabelle 1**

| Beispiel Nr. | q | λₘₐₓ [nm] | Affinität zu holzfreiem Papier | Färbung |
|---|---|---|---|---|
| 2 | 3 | 410 | gut | oberseitig |
| 3 | 4 | 410 | sehr gut | oberseitig |
| 4 | 5 | 412 | sehr gut | oberseitig |

### Beispiel 5

a) Eine Mischung von 106 g Piperazinhydrochlorid und 60 g 24 gew.-%iger wäßriger Cyanamidlösung wurde auf 115°C erwärmt. Bei dieser Temperatur ließ man in einer Stunde weitere 192 g Cyanamidlösung zufließen. Nach 8 Stunden kühlte man auf Raumtemperatur ab, saugte den Niederschlag ab und wusch ihn mit wenig Ethanol aus. Nach Lösen des gebildeten Hydrochlorides in schwach ammoniakalischem Wasser fällte man die Amidinbase mit 50 gew.-%iger Natronlauge aus. Nach Isolieren und Trocknen wurden 68 g der Verbindung der Formel 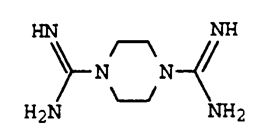 erhalten. (Fp.: 213 bis 216°C).
b) Eine Mischung von 12,5 g des unter a) beschriebenen Amidins, 36 g 30 gew.-%iger Natriumethanolatlösung in Ethanol und 16 g Malonsäuremethylester wurde in 80 g Ethanol 4 Stunden unter Rückfluß erhitzt. Nach Abkühlen auf Raumtemperatur wurde das ausgefallene Produkt abgesaugt und mit 50 ml Methanol gewaschen. Nach Auflösen in 100 ml Wasser wurde mit Salzsäure ein pH-Wert von 2 eingestellt, wonach das Produkt der Formel 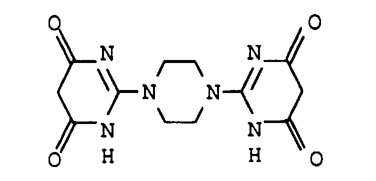 kristallin ausfiel. Es wurde isoliert, mit Wasser gewaschen und bei 70°C getrocknet. Man erhielt 9 g.
c) 6,4 g 2-(4-Aminophenyl) -6-methylbenzthiazol-7-sulfonsäure wurden in eine Mischung von 7 g konz. Salzsäure und 75 ml Wasser eingetragen. Nachdem man 2 Stunden bei 0 bis 5°C gerührt hatte, gab man 6,2 g 23 gew.-%ige wäßrige Natriumnitritlösung zu und zersetzte nach einer weiteren Stunde den Überschuß an salpetriger Säure mit Amidosulfonsäure. Das so erhaltene Gemisch ließ man langsam in eine Lösung von 3,1 g Amidin (Beispiel 5b) und 2,5 g 50 gew.-%ige Natronlauge in 50 ml Wasser einfließen und stellte mit ca. 6 g 10 gew.-%iger Natronlauge einen pH-Wert von 7 ein. Man rührte 18 Stunden bei Raumtemperatur nach, saugte den gebildeten Niederschlag ab, wusch ihn mit wenig eiskaltem Wasser nach und trocknete ihn bei 70°C. Die Ausbeute betrug 8,6 g Farbstoff der Formel 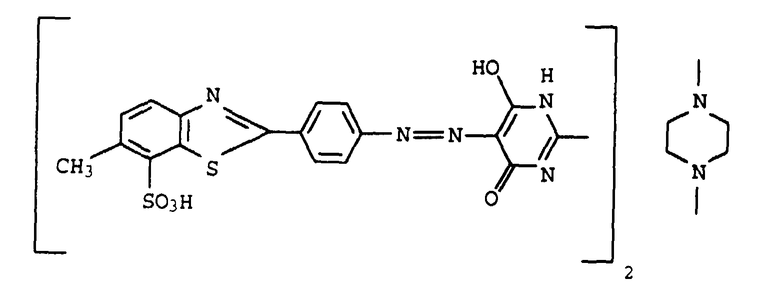 Der Farbstoff ergibt auf Papier gelbe Färbungen. Die Affinität ist auch zu holzfreien Papieren sehr gut. Dabei wird die Papieroberseite stärker als die Unterseite angefärbt.

Analog Beispiel 5 werden auch die in der folgenden Tabelle 2 aufgeführten Farbstoffe der Formel 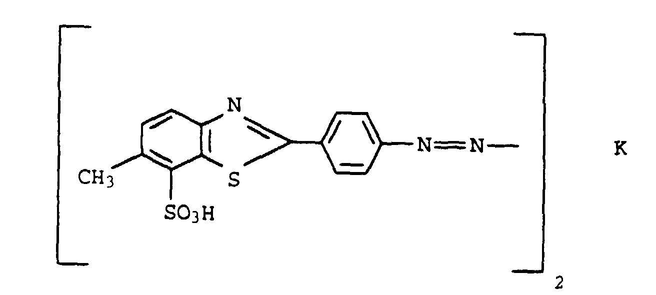 erhalten.

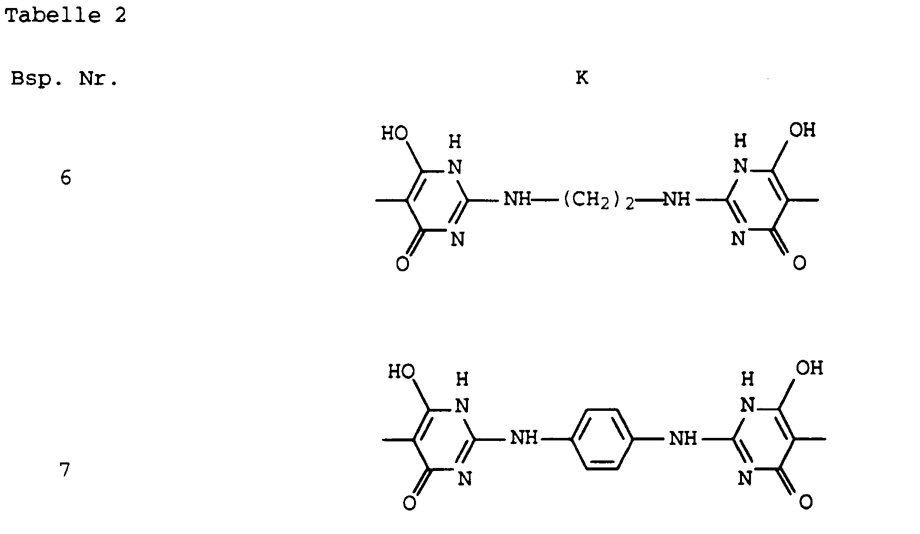

Die Farbstoffe sind ebenfalls gelb und zeichnen sich durch eine hohe Affinität zu Papierstoffen aus.

### Beispiel 8

Zu einer auf einen Mahlgrad von 30° SR gemahlenen, wäßrigen Stoffsuspension aus 70 g gebleichtem Kiefersulfatzellstoff und 30 g gebleichtem Birkensulfatzellstoff wurden bei einer Stoffdichte von 2,5 Gew.-% 1,14 g des Flüssigfarbstoffes aus Beispiel ld in Form einer 0,5 gew.-%igen essigsauren wäßrigen Lösung zugesetzt und 15 Minuten homogen gerührt. Anschließend wurde mit Trinkwasser auf eine Stoffdichte von 0,2 Gew.-% verdünnt und in üblicher Weise über einen Blattbildner ein Papierblatt gebildet. Das Abwasser war praktisch farblos. Das erhaltene gelbe Papierblatt war auf der Oberseite um 14 % stärker als auf der Unterseite angefärbt.

### Beispiel 9

Analog Beispiel 8 wurde eine Papierfärbung mit dem Farbstoff der Formel 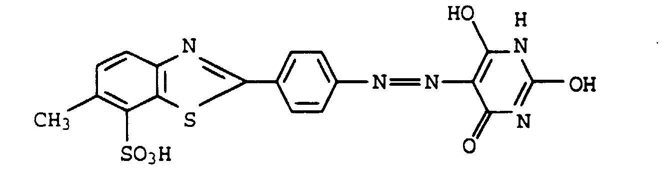 durchgeführt. Der in Flüssigform vorliegende Farbstoff wurde gemäß Beispiel 1 der EP-A-479 056 hergestellt. Mit 0,94 g dieser Flüssigeinstellung wurde ein gelbes Papierblatt erhalten, das auf der Unterseite um 20 % stärker als auf der Oberseite angefärbt war.

### Beispiel 10

Analog Beispiel 8 wurde eine Färbung mit der Kombination von 0,56 g Farbstoff gemäß Beispiel ld, und 0,47 g Farbstoff gemäß EP-A-479 056, Beispiel 1, durchgeführt. Das Abwasser war praktisch farblos und das gelbe Papierblatt ober- und unterseitig gleich stark angefärbt.

## Patentansprüche

1. Azofarbstoffe der Formel I 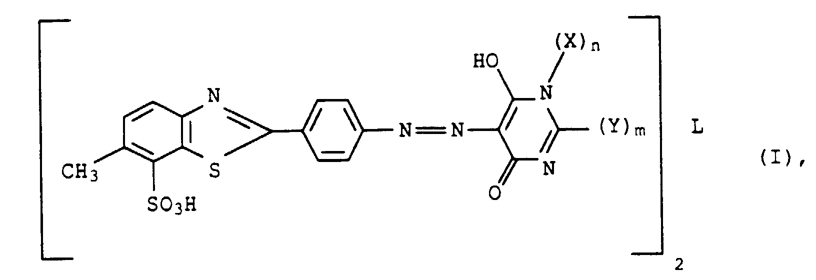 in der
im Fall a)
m 1,
n 0,
Y Hydroxy und
L C₁-C₆-Alkylen oder
im Fall b)
m 0 oder 1,
n 1,
X Wasserstoff,
Y Imino und
L, wenn m 0 ist, Piperazin-1,4-diyl oder, wenn m 1 ist, C₂-C₆-Alkylen oder Phenylen bedeuten.

2. Azofarbstoffe nach Anspruch 1, dadurch gekennzeichnet, daß m 1 und n 0 bedeuten.

3. Azofarbstoffe nach Anspruch 1, dadurch gekennzeichnet, daß m 0, n 1 und L Piperazin-1,4-diyl bedeuten.

4. Azofarbstoffe nach Anspruch 1, dadurch gekennzeichnet, daß m 1, n 0 und L C₄-C₆-Alkylen bedeuten.

5. Verwendung der Farbstoffe gemäß Anspruch 1 zum Färben oder Bedrucken von Papierstoffen.

6. Farbstoffmischungen, enthaltend einen Farbstoff der Formel I gemäß Anspruch 1 sowie den Farbstoff der Formel II

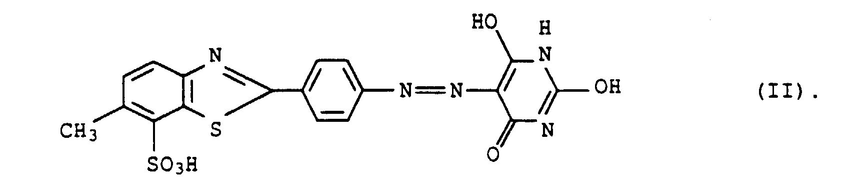

## Claims

1. Azo dyes of the formula I 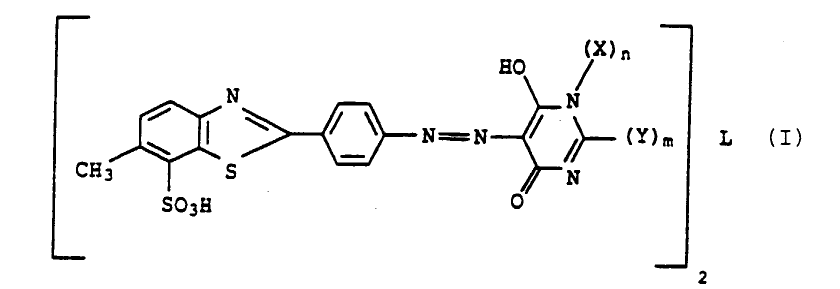 where
in case a)
m is 1,
n is 0,
Y is hydroxyl, and
L is C₁-C₆-alkylene, or
in case b)
m is 0 or 1,
n is 1,
X is hydrogen,
Y is imino, and
L is 1,4-piperazinediyl when m is 0 or C₂-C₆-alkylene or phenylene when m is 1.

2. Azo dyes as claimed in claim 1, wherein m is 1 and n is 0.

3. Azo dyes as claimed in claim 1, wherein m is 0, n is 1 and L is 1,4-piperazinediyl.

4. Azo dyes as claimed in claim 1, wherein m is 1, n is 0 and L is C₄-C₆-alkylene.

5. The use of the dyes of claim 1 for dyeing or printing paper stock.

6. Dye mixtures comprising a dye of the formula I as set forth in claim 1 and the dye of the formula II

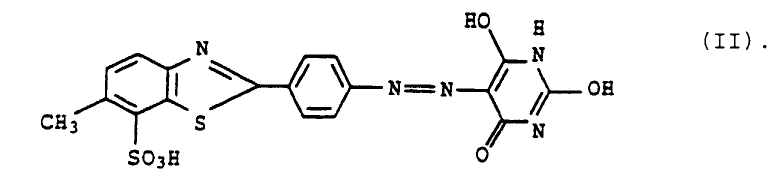

## Revendications

1. Colorants azoïques de formule I 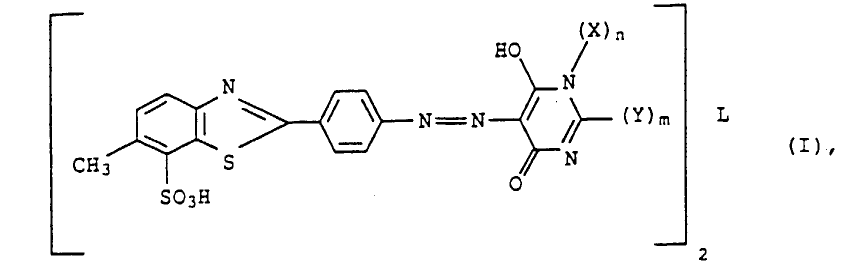 dans laquelle
cas a)
m vaut 1,
n vaut 0,
Y représente un groupement hydroxy et
L un groupement alkylène en C₁-C₆ ou
cas b)
m vaut 0 ou 1,
n vaut 1,
X représente un atome d'hydrogène,
Y un groupement imino et
L représente un groupement pipérazine-1,4-diyle lorsque m vaut 0 ou, lorsque m vaut 1, un groupement alkylène en C₂-C₆ ou phénylène.

2. Colorants azoïques selon la revendication 1, caractérisés en ce que m vaut 1 et n vaut 0.

3. Colorants azoïques selon la revendication 1, caractérisés en ce que m vaut 0, n vaut 1 et L représente un groupement pipérazine-1,4-diyle.

4. Colorants azoïques selon la revendication 1, caractérisés en ce que m vaut 1, n vaut 0 et L représente un groupement alkyléne en C₄-C₆.

5. Utilisation des colorants selon la revendication 1 pour la coloration ou l'impression de papier.

6. Mélanges de colorants contenant un colorant de formule I selon la revendication 1 ainsi que le colorant de formule II
